# EUROPEAN PATENT SPECIFICATION

(11) **EP 3 466 884 B1**
(45) Date of publication and mention of the grant of the patent: **06.11.2024**
(21) Application number: 17806838.3
(22) Date of filing: 02.06.2017
(51) Int. Cl.: C01G 9/02, C01G 49/06, C09C 1/24, C09C 3/06, C01B 13/36, C09C 1/04, B01J 13/02, C03C 17/00, C08K 9/06, C08K 3/22, C09D 7/62, C01F 17/235, B22F 1/054, B22F 1/102, C01G 51/00, C09C 1/22, C09D 5/00, C01G 9/00

(54) **SILICON-COATED METAL PARTICLES, SILICON COMPOUND-COATED METAL PARTICLES, AND PRODUCTION METHOD THEREFOR**
SILICIUMBESCHICHTETE METALLPARTIKEL, MIT SILICIUMVERBINDUNG BESCHICHTETE METALLPARTIKEL UND HERSTELLUNGSVERFAHREN DAFÜR
PARTICULES MÉTALLIQUES REVÊTUES DE SILICIUM, PARTICULES MÉTALLIQUES REVÊTUES D'UN COMPOSÉ DE SILICIUM ET LEURS PROCÉDÉS DE PRODUCTION

(30) Priority: 02.06.2016 JP 2016111346; 03.06.2016 WO PCT/JP2016/066542; 07.11.2016 WO PCT/JP2016/083001
(43) Date of publication of application: 10.04.2019
(73) Proprietor: M. Technique Co., Ltd., Izumi-shi, Osaka 594-1144 (JP)
(72) Inventor: ENOMURA Masakazu, Izumi-shi Osaka 594-1144 (JP); HONDA Daisuke, Izumi-shi Osaka 594-1144 (JP)
(74) Representative: Marks & Clerk LLP
(86) International application number: PCT/JP2017/020659
(87) International publication number: WO 2017/209288

(56) References cited:
- EP-B1- 0 201 068
- WO-A1-2013/073695
- WO-A1-2016/009926
- DE-A1- 102013 220 253
- JP-A- 2009 082 902
- JP-A- 2011 094 212
- JP-A- 2014 029 024
- JP-A- S5 931 004
- JP-A- S5 931 004
- JP-A- S60 135 506
- JP-A- S61 256 705
- NIITSOO O ET AL: "Facile synthesis of silver core - silica shell composite nanoparticles", JOURNAL OF COLLOID AND INTERFACE SCIENCE, ACADEMIC PRESS,INC, US, vol. 354, no. 2, 15 February 2011 (2011-02-15), pages 887 - 890, XP027580366, ISSN: 0021-9797, [retrieved on 20101230]
- FU W ET AL: "Preparation and characteristics of core-shell structure nickel/silica nanoparticles", COLLOIDS AND SURFACES A: PHYSIOCHEMICAL AND ENGINEERING ASPECTS, ELSEVIER, AMSTERDAM, NL, vol. 262, no. 1-3, 15 July 2005 (2005-07-15), pages 71 - 75, XP027803212, ISSN: 0927-7757, [retrieved on 20050715]

## Description

### TECHNICAL FIELD

The present invention relates to silicon coated metal microparticles, silicon compound coated metal microparticles, and a production method thereof.

### BACKGROUND ART

Metal microparticles are materials that are widely used as a magnetic material, conductive material, coloring material, catalysts, etc. Particularly, when they are microparticles of 1 µm or less, their properties are improved, and a suitable composition can be made when used as a dispersion or the like. However, it has been difficult to utilize the characteristics as metal microparticles at the maximum, because in any applications, accompanying the characteristics generated or improved by micronization of metal microparticles, explosive reactions due to rapid oxidation in the atmosphere tend to occur, and the expected characteristics as metal microparticles tend to be lost due to oxidation, hydroxylation, etc. by contact with moisture.

In order to solve these problems, it is effective to coat a surface of metal microparticles with a silicon compound such as silica as described in Patent Literatures 1 and 2. However, a method such as a sputtering method or an evaporation method as described in Patent Literature 1 requires a very high energy and a high vacuum, so that a cost tends to be high. Also, the silicon compound coated metal particles of 30 µm or more as described in Patent Literature 2, do not have the characteristics particularly expected as metal nanoparticles micronized to 1 µm or less.

A method of preparing silica coated metal microparticles such as silica coated aluminum by introducing a silicon compound such as tetraethoxysilane into a metal microparticle dispersion as described in Patent Literature 3 has become the mainstream. However, a base metal such as aluminum are particularly susceptible to oxidation, and in particular, it is difficult to maintain the metal state from the surface to the inside, in the case of base metal microparticles of 1 µm or less. Therefore, even in silicon compound coated metal microparticles prepared by a method of coating with a silicon compound in a liquid, it was difficult to obtain the characteristics expected as metal nanoparticles micronized to 1 µm or less.

Patent Literature 4 filed by the present applicant discloses a method of producing uniform metal microparticles by using a method of precipitating various nanoparticles of metal microparticles, magnetic material microparticles or the like between two processing surfaces being capable of approaching to and separating from each other and rotating relative to each other. However, although Patent Literature 4 describes the production of uniform metal microparticles, Patent Literature 4 does not describe about silicon compound coated metal microparticles, or naturally a production method thereof. Namely, a method for producing silicon compound coated metal microparticles has not been described, and thus, silicon compound coated metal microparticles and a production method thereof have been desired, which can be stably supplied with good cost competitiveness.

Patent Literature 5 relates to a process for preparing acicular ferromagnetic metal particles which consist essentially of iron and contain phosphate ions.

Patent Literature 6 relates to a metal magnetic powder and manufacture thereof.

Non Patent Literature 1 relates to silica coated silver nanoparticles.

Non Patent Literature 2 relates to silica coated nickel nanoparticles.

### CITATION LIST

### PATENT LITERATURE

Patent Literature 1: JP 2008-264611
Patent Literature 2: JP 2007-088156
Patent Literature 3: JP 2012-241039
Patent Literature 4: WO 2009/008393
Patent Literature 5: EP 0 201 068 B1
Patent Literature 6: JP S59 31004 A

### NON PATENT LITERATURE:

Non Patent Literature 1: Niitsoo O et al., Journal of Colloid and Interface Science, 2011, 354 (2), 887-890
Non Patent Literature 2: Fu W et al., Colliuds and Surfaces A: Physicochemical and Engineering Aspects, 2005, 262 (1-3), 71-75

### SUMMARY OF THE INVENTION

### TECHNICAL PROBLEM

In view of such circumstances, an object of the present invention is to provide a method of producing silicon coated metal microparticles or silicon compound coated metal microparticles, and silicon coated metal microparticles or silicon compound coated metal microparticles, which can be stably supplied with low energy and resource conservation. Since regular arrangement of atoms on a surface of metal microparticles is discontinuous, the atoms present on the surface of the microparticles are very reactive, and in many cases react with suitable surrounding substances to form surface compounds. Particularly in the case of minute particles of 1 µm or less, the influence of atoms on the surface becomes significant, so it is necessary to precisely control the surface compounds. An object of the present invention is to control a particle diameter of the silicon compound coated metal microparticles, for the purpose of controlling the surface compounds of the metal microparticles and maximizing the expected characteristics and compensating for such characteristics. Another object of the present invention is to provide various compositions using silicon compound coated metal microparticles whose particle diameter is controlled.

### SOLUTION TO THE PROBLEM

The present invention conversely utilizes the highly reactive surfaces of microparticles. Specifically, in the present invention, metal microparticles are prepared by a reduction treatment of a precursor of the intended metal microparticles. The present invention is set out in the appended claims. The invention and embodiments thereof are described below. Particularly in a reduction treatment of precursor microparticles of 100 nm or less, the intended metal microparticles can be stably produced with low energy and resource conservation.

The present invention provides silicon compound coated metal microparticles, a composition for coating comprising the silicon compound coated microparticles and a method of producing silicon compound coated metal microparticles according to the appended claims. Namely, the present invention is silicon coated metal microparticles in which at least a part of a surface of a metal microparticle composed of at least one of metal elements or metalloid elements is coated with silicon, wherein the silicon coated metal microparticles are a product obtained by a reduction treatment of silicon compound coated precursor microparticles in which at least a part of a surface of a precursor microparticle containing a precursor of the metal microparticles is coated with a silicon compound, or silicon doped precursor microparticles containing a precursor of the metal microparticles.

The present invention is silicon compound coated metal microparticles in which at least a part of a surface of a metal microparticle composed of at least one of metal elements or metalloid elements is coated with a silicon compound, wherein the silicon compound coated metal microparticles are a product obtained by a reduction treatment of silicon compound coated precursor microparticles in which at least a part of a surface of a precursor microparticle containing a precursor of the metal microparticles is coated with a silicon compound, or silicon doped precursor microparticles containing a precursor of the metal microparticles, followed by an oxidation treatment of a surface of the obtained silicon compound coated metal microparticles.

The present invention is silicon compound coated metal microparticles in which at least a part of a surface of a metal microparticle composed of at least one of metal elements or metalloid elements is coated with a silicon compound, wherein the silicon compound coated metal microparticles are a product obtained by a reduction treatment of silicon compound coated precursor microparticles in which at least a part of a surface of a precursor microparticle having a primary particle diameter of 100 nm or less containing a precursor of the metal microparticles is coated with a silicon compound, or silicon doped precursor microparticles having a primary particle diameter of 100 nm or less containing a precursor of the metal microparticles.

In the present invention, it is preferable that the silicon compound coated precursor microparticles are silicon compound coated precursor microparticles in which at least a part of a surface of one precursor microparticle is coated with a silicon compound, a primary particle diameter of the precursor microparticle is 100 nm or less, and a primary particle diameter of the silicon compound coated precursor microparticle is 100.5% or more and 190% or less relative to a primary particle diameter of the precursor microparticle.

In the present invention, it is preferable that the silicon compound coated precursor microparticles are core-shell type silicon compound coated precursor microparticles in which entire surface of one core precursor microparticle is coated with a shell silicon compound.

In the present invention, it is preferable that the silicon compound coated precursor microparticles are silicon compound coated precursor microparticles in which at least a part of a surface of an aggregate of a plurality of precursor microparticles is coated with a silicon compound, a diameter of the aggregate is 100 nm or less, and a particle diameter of the silicon compound coated precursor microparticle is 100.5% or more and 190% or less relative to a diameter of the aggregate.

In the present invention, it is preferable that the silicon compound coated precursor microparticles or silicon doped precursor microparticles contain silicon inside the precursor microparticles before a heat treatment under a reduction atmosphere, and at least a part of the silicon is transferred from the inside of the precursor microparticles in the outer peripheral direction, as compared with the state before the heat treatment under a reduction atmosphere.

In the present invention, the silicon compound contains an amorphous silicon compound.

In the present invention, it is preferable that the precursor is at least one selected from a salt, an oxide, a hydroxide and a hydroxide oxide of at least one of metal elements or metalloid elements constituting the silicon compound coated metal microparticles.

In the present invention, it is preferable that the precursor contains an amorphous precursor.

In the present invention, it is preferable that the silicon compound coated metal microparticles are silicon compound coated metal microparticles in which at least a part of a surface of one metal microparticle is coated with a silicon compound, a primary particle diameter of the metal microparticle is 1 µm or less, and a primary particle diameter of the silicon compound coated metal microparticle is 100.5% or more and 190% or less relative to a primary particle diameter of the metal microparticle.

In the present invention, it is preferable that the silicon compound coated metal microparticles are core-shell type silicon compound coated metal microparticles in which entire surface of one core metal microparticle is coated with a shell silicon compound.

In the present invention, it is preferable that the silicon compound coated metal microparticles are silicon compound coated metal microparticles in which at least a part of a surface of an aggregate of a plurality of metal microparticles is coated with a silicon compound, a diameter of the aggregate is 100 nm or less, and a particle diameter of the silicon compound coated metal microparticle is 100.5% or more and 190% or less relative to a diameter of the aggregate.

In the present invention, the metal elements or metalloid elements comprise at least one selected from the group consisting of iron, silicon and aluminum.

The present invention can be performed as a composition for coating, a composition for a transparent material, a magnetic material composition, a conductive composition, a composition for coloring, a reaction composition or a catalyst composition, comprising the silicon compound coated metal microparticles.

The present invention is a method of producing silicon compound coated metal microparticles in which at least a part of a surface of a metal microparticle composed of at least one of metal elements or metalloid elements is coated with a silicon compound, wherein silicon compound coated precursor microparticles in which at least a part of a surface of a precursor microparticle containing a precursor of the metal microparticles is coated with a silicon compound, or silicon doped precursor microparticles containing a precursor of the metal microparticles, are subjected to a reduction treatment up to silicon compound coated metal microparticles.

In the present invention, it is preferable that the silicon compound coated precursor microparticles or the silicon doped precursor microparticles are subjected to a reduction treatment up to silicon coated metal microparticles, and the surface layer of the silicon coated metal microparticles obtained by the reduction treatment is subjected to an oxidation treatment.

In the present invention, it is preferable that a primary particle diameter of the silicon compound coated precursor microparticles or the silicon doped precursor microparticles is 100 nm or less.

In the present invention, it is preferable that the reduction treatment is a heat treatment of powders of the silicon compound coated precursor microparticles or the silicon doped precursor microparticles under a reduction atmosphere, and a particle diameter of the silicon compound coated metal microparticles is controlled by controlling a heat treatment temperature and a treatment time under the reduction atmosphere.

In the present invention, it is preferable that a particle diameter of the silicon compound coated metal microparticles after the reduction treatment is increased more than that of the silicon compound coated precursor microparticles or the silicon doped precursor microparticles before the reduction treatment.

### ADVANTAGEOUS EFFECTS OF THE INVENTION

The present invention can provide silicon coated metal microparticles or silicon compound coated metal microparticles obtained by a reduction treatment of silicon compound coated precursor microparticles in which at least a part of a surface of a precursor microparticle containing a precursor of the metal microparticles is coated with a silicon compound, or silicon doped precursor microparticles containing a precursor of the metal microparticles; and a method of producing the same. Because it is possible particularly to strictly control a particle diameter of the silicon compound coated metal microparticle by controlling conditions of the reduction treatment, design of a more appropriate composition can become facilitated, compared with a conventional composition, in terms of diversified usages and desired properties of silicon compound coated metal microparticles.

### BRIEF DESCRIPTION OF THE DRAWINGS

FIG 1 shows an STEM mapping result of the silicon compound coated silicon aluminum doped iron microparticles obtained in Example 1-5.
FIG 2 shows an XRD measurement result of the silicon compound coated silicon aluminum doped iron microparticles obtained in Example 1-5.
FIG 3 shows comparison charts of peaks of the peak list and peaks of Fe (Metal) in the database, on the charts enlarging the regions where peaks were observed in the XRD measurement result of the silicon compound coated silicon aluminum doped iron microparticles obtained in Example 1-5.
FIG 4 shows an STEM mapping result of the silicon compound coated silicon aluminum doped iron microparticles obtained in Example 1-8.

### DESCRIPTION OF THE INVENTION

Hereinafter, the present invention is explained by embodiments of the present invention based on the drawings as an example. However, embodiments of the present invention are not limited only to the embodiments described hereinafter.

### (Silicon compound coated metal microparticle composition 1)

The silicon coated metal microparticles or silicon compound coated metal microparticles of the present invention are microparticles obtained by a reduction treatment of silicon compound coated precursor microparticles in which at least a part of a surface of a precursor microparticle containing a precursor of the metal microparticles is coated with a silicon compound, or silicon doped precursor microparticles containing a precursor of the metal microparticles. Silicon compound coated metal microparticles containing a silicon oxide can be obtained by oxidizing a surface of the silicon coated metal microparticles under an oxidation atmosphere. The silicon compound coated metal microparticles of the present invention are suitable particularly for a composition for coating used for the purpose of coating on a coating film or a coated body; a composition for a transparent material used for the purpose of kneading or coating in a transparent material such as a glass, film, transparent resin or the like ; a magnetic material composition used for the purpose of adding in a magnetic fluid, a magnetic material or the like; a conductive composition used for the purpose of adding in an electronic material, semiconductor material or the like; a composition for coloring used for the purpose of coloring a coating film, coated body, transparent agent or the like; and a reaction composition or a catalyst composition used as a material for various chemical reactions.

### (Embodiment-1 of silicon compound coated metal microparticles)

The silicon coated metal microparticles or silicon compound coated metal microparticles of the present invention are metal microparticles in which at least a part of a surface of a metal microparticle is coated with silicon or a silicon compound. The metal is metal microparticles containing a single element or a plurality of different elements of a metal element or a metalloid element in the chemical periodic table. The metal element in the present invention is not particularly limited, but includes preferably a metal element such as Ag, Cu, Fe, Al and the like. A metalloid element in the present invention is not particularly limited, but preferably includes a metalloid element such as Si, Ge, As, Sb, Te, Se and the like. These metals and metalloids may be metal microparticles composed of a single metal element, or may be alloy microparticles composed of a plurality of metal elements or alloy microparticles containing a metal element and a metalloid element.

### (Embodiment-2 of silicon compound coated metal microparticles)

Metal microparticles in the silicon coated metal microparticles or the silicon compound coated metal microparticles of the present invention are not limited to particles composed only of metals. Metal microparticles containing a compound other than metals may be also used to the extent that the compound does not affect the present invention. For example, metal microparticles in which at least a part of a surface of the metal microparticle or alloy microparticle containing a compound other than metals is coated with silicon or a silicon compound, may be used. Examples of the above compound other than metals include an oxide, hydroxide, hydroxide oxide, nitride, carbide, various salts such as a nitrate, sulfate and carbonate, and a hydrate and organic solvate. In the case where the compound other than metals is contained in the metal microparticles in the method for producing silicon compound coated metal microparticles of the present invention described later, the compound other than metals may be used as a precursor of the metal or as silicon compound coated precursor microparticles.

### (Method of producing silicon compound coated precursor microparticles: Outline of method)

The silicon coated metal microparticles or silicon compound coated metal microparticles of the present invention can be prepared by a reduction treatment of silicon compound coated precursor microparticles in which at least a part of a surface of a precursor microparticle containing a precursor of the metal microparticles is coated with a silicon compound, or silicon doped precursor microparticles containing a precursor of the metal microparticles. As an example of a method of producing the silicon compound coated precursor microparticles or silicon doped precursor microparticles, it is preferable to use a method of producing the silicon compound coated precursor microparticles by providing a precursor raw material liquid containing at least a raw material of precursor microparticles to be coated with a silicon compound and a precursor precipitation solvent containing at least a precipitation substance for precipitating precursor microparticles; and precipitating precursor microparticles by a method such as a reaction, crystallization, precipitation and coprecipitation, in a mixed fluid in which the precursor raw material liquid and the precursor precipitation solvent are mixed; and coating at least a part of the surface of the precursor microparticle with a silicon compound being a coating compound by mixing the mixed fluid containing the precipitated precursor microparticles with a silicon compound raw material liquid containing at least a raw material of the silicon compound. Or, in the case of producing silicon doped precursor microparticles, a method wherein the silicon compound raw material is contained in any of the precursor raw material liquid and the precursor precipitation solvent can also be performed. In order to prepare silicon coated alloy microparticles or silicon compound coated alloy microparticles by using alloy microparticles as the metal microparticles, a plurality of different metal elements or metalloid elements constituting the alloy microparticles is preferably contained in the precursor microparticles. A raw material containing those metal elements or metalloid elements may be contained in the precursor raw material liquid, or may be contained in the precursor raw material liquid and the precursor precipitation solvent respectively, or may be contained in both of the precursor raw material liquid and the precursor precipitation solvent or the silicon compound raw material liquid.

### (Precursor microparticles and raw material of precursor microparticles)

A precursor constituting silicon compound coated precursor microparticles or silicon doped precursor microparticles in the present invention is not particularly limited, and various compounds may be included. In the present invention, hereinafter, a compound of a metal element or metalloid element is referred to as a compound. The compound is not particularly limited, but includes, for example, a salt, an oxide, a hydroxide, a hydroxide oxide, a nitride, a carbide, a complex, an organic salt, an organic complex, an organic compound of the metal element or metalloid element, or a hydrate thereof, an organic solvate thereof, and the like. The salt is not particularly limited, but includes a chloride, a nitrate, a nitrite, a sulfate, a sulfite, a carbonate, a formate, an acetate, a phosphate, a phosphite, a hypophosphite, a chloride, an oxy salt, an acetylacetonate of the metal element or metalloid element, or a hydrate thereof, an organic solvate thereof and the like. An organic compound includes a metal element alkoxide, a metalloid element alkoxide, and the like. These metal element compound or metalloid element compound may alone constitute the precursor microparticles, or a mixture of a plurality of these compounds may constitute the same. Materials similar to various compounds constituting the precursor microparticles can be used as a raw material of the precursor microparticles, but a simple substance of a metal or metalloid can also be used as a raw material of the precursor microparticles. However, a simple substance of a metal or metalloid may be contained in the precursor microparticles to the extent that the substance does not affect the present invention. In the present invention, the raw material of the precursor microparticles can be performed as long as the raw material of the precursor microparticles becomes precursor microparticles by a method such as a reaction, crystallization, precipitation, coprecipitation and the like, and silicon compound coated precursor microparticles are prepared by coating with a silicon compound, or silicon doped precursor microparticles are prepared by containing silicon in the precursor microparticles. In the present invention, silicon coated metal microparticles or silicon compound coated metal microparticles can be obtained by subjecting the silicon compound coated precursor microparticles or the silicon doped precursor microparticles to a reduction treatment. Therefore, by containing two or more different elements of metal elements or metalloid elements in the precursor microparticles, silicon coated metal microparticles or silicon compound coated metal microparticles can be prepared as silicon coated alloy microparticles or silicon compound coated alloy microparticles. In such case, a molar ratio of M2 to M1 (M2/M1) constituting the M2 doped oxide particles is preferably 0.01 or more and 1.00 or less, wherein M1 is the main metal element and M2 is the subordinate metal element or metalloid element.

A raw material of the silicon compound includes a silicon oxide, a silicon hydroxide, other compounds such as a silicon salt and a silicon alkoxide, and a hydrate thereof. Not particularly limited, it includes a silicate such as sodium silicate, phenyltrimethoxysilane, methyltrimethoxysilane, methyltriethoxysilane, 3-glycidoxypropyltrimethoxysilane, 3 -trifluoropropyl-trimethoxysilane, methacryloxypropyltriethoxysilane, tetramethoxysilane (TMOS), tetraethoxysilane (TEOS), and an oligomeric condensate of TEOS, for example, ethyl silicate 40, tetraisopropylsilane, tetrapropoxysilane, tetraisobutoxysilane, tetrabutoxysilane, and a similar material thereof. Further as a raw material of silicon oxide, another siloxane compound, bis(triethoxysilyl)methane, 1,9-bis(triethoxysilyl)nonane, diethoxy dichlorosilane, triethoxychlorosilane and the like may be used.

Further, when a raw material of the precursor microparticles or a raw material of a silicon compound for coating or doping is a solid, it is preferable to use each raw material in a molten state, or in a state of being mixed or dissolved in a solvent described below, including a dispersion state. Even when each raw material is a liquid or gas, it is preferable to use it in a state of being mixed or dissolved in a solvent described below, including a dispersion state.

A precursor precipitation substance is not particularly limited as long as the substance can make a raw material of the silicon compound coated precursor microparticles or silicon doped precursor microparticles contained in a precursor raw material liquid be precipitated as silicon compound coated precursor microparticles or silicon doped precursor microparticles. For example, an acidic substance or a basic substance may be used. A basic substance includes a metal hydroxide such as sodium hydroxide and potassium hydroxide, a metal alkoxide such as sodium methoxide and sodium isopropoxide, an amine compound such as triethylamine, diethylaminoethanol and diethylamine, ammonia and the like. In addition, for example, in the case where sodium chloride as a raw material of a precursor is dissolved in water and mixed with an alcohol or the like to precipitate sodium chloride microparticles as precursor microparticles, the alcohol may also act as a solvent, or as a precursor precipitation substance.

An acidic substance includes an inorganic acid such as aqua regia, hydrochloric acid, nitric acid, fuming nitric acid, sulfuric acid, fuming sulfuric acid, and an organic acid such as formic acid, acetic acid, chloroacetic acid, dichloroacetic acid, oxalic acid, trifluoroacetic acid, trichloroacetic acid, citric acid and the like. The basic substance and the acidic substance can also be used for precipitating silicon compound coated precursor microparticles or a compound for coating.

### (Solvent)

A solvent used in preparation of a precursor raw material liquid, a precursor precipitation solvent and a silicon compound raw material liquid, includes, for example, water, an organic solvent, or a mixed solvent of a plurality of these solvents. The water includes tap water, ion exchange water, pure water, ultrapure water, RO water (reverse osmosis water) and the like. The organic solvent includes, an alcohol solvent, an amide solvent, a ketone solvent, an ether solvent, an aromatic compound solvent, carbon disulfide, an aliphatic compound solvent, a nitrile solvent, a sulfoxide solvent, a halogen compound solvent, an ester solvent, an ionic liquid, a carboxylic acid compound, a sulfonic acid compound and the like. Each of the solvents may be used alone, or a plurality of them may be mixed and used. An alcohol solvent includes a monohydric alcohol such as methanol and ethanol, a polyol such as ethylene glycol and propylene glycol, and the like.

### (Dispersing agent and the like)

Various dispersing agents or surfactants may be used depending on a purpose or necessity, as long as they do not adversely affect production of the silicon compound coated precursor microparticles, or the silicon doped precursor microparticles and ultimately the targeted silicon compound coated metal microparticles of the present invention. Not particularly limited, as a dispersing agent or a surfactant, various generally used commercial products or products, and newly synthesized products and the like may be used. As an example, a dispersing agent such as an anionic surfactant, a cationic surfactant, a nonionic surfactant, and various polymers and the like may be used. These may be used alone or two or more thereof may be used in combination. The surfactant and dispersing agent may be contained in at least one fluid of the precursor raw material liquid and precursor precipitation solvent. In addition, the surfactant and dispersing agent may be contained in another fluid different from the precursor raw material liquid and precursor precipitation solvent.

### (Method of producing silicon compound coated precursor microparticles: Preferable method)

In the step of coating at least a part of a surface of the precursor microparticles with a silicon compound, it is preferable to coat with the silicon compound before the precursor microparticles aggregate. When a silicon compound raw material liquid is mixed with a fluid containing the precursor microparticles, it is important that after precipitating the precursor microparticles, the silicon compound precipitates on the surface of the precursor microparticles by adding the silicon compound raw material liquid at a rate faster than aggregation occurs. Furthermore, by introducing the silicon compound raw material liquid into the fluid containing the precursor microparticles, pH of the fluid containing the precursor microparticles and a concentration of the silicon compound raw material gradually change. If the silicon compound for coating the surface of the particles precipitates after an easily dispersible state is changed to an easily aggregating state, there is a possibility that it becomes difficult to coat before aggregation and the characteristics of the present invention cannot be exhibited. It is preferable to actuate the silicon compound raw material contained in the silicon compound raw material liquid immediately after the precursor microparticles precipitate. It is preferable to obtain silicon compound coated precursor microparticles by a method of precipitating precursor microparticles between two processing surfaces being capable of approaching to and separating from each other and rotating relative to each other as described in Patent Literature 4, and continuously coating a surface of the precursor microparticles with a silicon compound. There are advantages that for example, a particle diameter, crystallinity, and a ratio of Si-OH bonds or a ratio of Si-OH bonds / Si-O bonds contained in the silicon compound coated precursor microparticles or the silicon doped precursor microparticles can be controlled, by changing a temperature, pH, and formulation condition at the time of obtaining the silicon compound coated precursor microparticles; and that a reduction state and reduction rate to the silicon coated metal microparticles or silicon compound coated metal microparticles described later.

### (Method of producing silicon compound coated precursor microparticles: Apparatus)

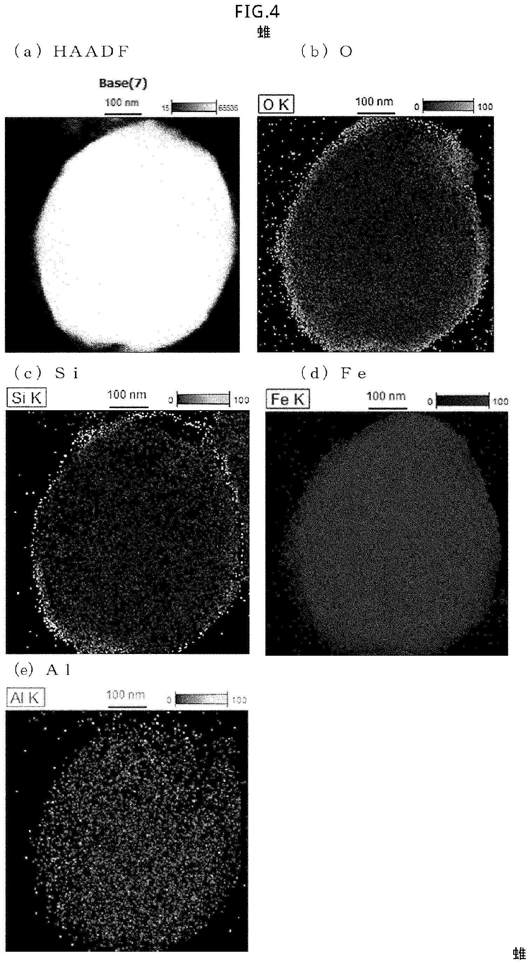

A method of producing the silicon compound coated precursor microparticles or the silicon doped precursor microparticles of the present invention includes, for example, a method of producing the silicon compound coated precursor microparticles by using a microreactor, or by a reaction in a dilute system in a batch vessel or the like, and the like. The apparatus and method as proposed by the present applicant and described in JP 2009-112892 may be also used for producing the silicon compound coated precursor microparticles. The apparatus described in JP 2009-112892 comprises a stirring tank having an inner peripheral surface which cross-section is circular, and a mixing tool attached to the stirring tank with a slight gap to the inner peripheral surface of the stirring tank, wherein the stirring tank comprises at least two fluid inlets and at least one fluid outlet; from one of the fluid inlets, the first fluid to be processed containing one of the reactants among the fluids to be processed is introduced into the stirring tank; from one fluid inlet other than the above inlet, the second fluid to be processed containing one of reactants different from the above reactant is introduced into the stirring tank through a different flow path; at least one of the stirring tank and the mixing tool rotates at a high speed relative to the other to let the above fluids be in a state of a thin film; and in the above thin film, the reactants contained in the first and second fluids to be processed are reacted. JP 2009-112892 further describes that three or more inlet tubes may be provided as shown in FIGs. 4 and 5 to introduce three or more fluids to be processed into the stirring tank. As an example of the microreactor, an apparatus using the same principle as the fluid processing apparatus described in Patent Literature 4 can be used. Alternatively, precursor microparticles may be prepared by using a pulverization method such as a beads mill and the like, and then a process of coating precursor microparticles with a silicon compound may be performed in a reaction vessel or the microreactor described above or the like.

The silicon compound coated metal microparticles of the present invention can be obtained by treating the silicon compound coated precursor microparticles or the silicon doped precursor microparticles under a reduction atmosphere. The microparticles can be specifically obtained by a method of preparing silicon compound coated precursor microparticles in which at least a part of a surface of a precursor microparticle containing a precursor of the metal microparticles is coated with a silicon compound, or silicon doped precursor microparticles containing a precursor of the metal microparticles; and subjecting the silicon compound coated precursor microparticles or the silicon doped precursor microparticles to a reduction treatment under a reduction atmosphere. Reduction to silicon coated iron microparticles or silicon compound coated iron microparticles can be performed, for example, by a heat treatment of silicon compound coated precursor microparticles such as silicon compound coated iron oxide particles under a hydrogen atmosphere of a reduction atmosphere. In addition, the silicon compound coated precursor microparticles can be reduced to the silicon coated metal microparticles by treating the silicon compound coated precursor microparticles under a reduction atmosphere, and thereafter the silicon can be converted to a silicon compound such as a silicon oxide by a treatment under an oxidation atmosphere such as the atmosphere, whereby the silicon coated metal microparticles can be converted to the silicon compound coated metal microparticles. A reduction treatment of the silicon compound coated precursor microparticles or the silicon doped precursor microparticles under a reduction atmosphere, includes a method of reducing powders of the silicon compound coated precursor microparticles or the silicon doped precursor microparticles in a furnace under a reduction atmosphere such as hydrogen, ammonia, hydrogen sulfide, sulfur dioxide, nitrogen monoxide and the like. An oxidation gas for oxidizing the silicon coated metal microparticles includes an oxidation gas such as oxygen, ozone, nitrogen dioxide, the atmosphere and the like.

As described above, the silicon compound coated metal microparticles of the present invention can also be obtained by treating the silicon doped precursor microparticles containing silicon in the precursor microparticles under a reduction atmosphere. For example, silicon alloy particles can be obtained by a heat treatment of silicon doped precursor microparticles containing silicon and a metal or metalloid element M under a reduction atmosphere to make all of silicon and a metal or metalloid element M be reduced. Next, the silicon compound coated metal microparticles or the silicon compound coated silicon alloy particles can be produced by treating the obtained silicon alloy particles under an oxidation atmosphere such as the atmosphere to oxidize the silicon contained on the surface of the silicon alloy particles into a silicon compound such as a silicon oxide.

The inventors of the present invention have found that the silicon contained in the precursor microparticles moves from the inside to the outside of the particles by a heat treatment under a reduction atmosphere. The inventors have also found that even in the case that particles are fused to each other, the fused part between the particles can be brought into a state that silicon and a silicon compound are reduced and are not contained in the fused part, and a surface of the particles having particle diameters more increased by fusion than before the heat treatment can be brought into a state of being coated with a silicon compound. The metal microparticles contain silicon inside before being subjected to a heat treatment under a reduction atmosphere, and in these method, at least a part of the silicon is transferred from the inside of the metal microparticles to the outer peripheral direction, as compared with before the heat treatment under a reduction atmosphere, to form the silicon compound coated metal microparticles, which are advantageous in that the precursor particles reduction or the particle diameter control and the silicon compound coating can be performed respectively simultaneously. However, the present invention is not limited to the simultaneous reduction, particle diameter control and silicon compound coating. In addition, for example, when the silicon compound coated metal microparticles of the present invention are used as a wiring material of a conductive material or the like, a conductive wiring is formed by the metal element contained in the silicon compound coated metal microparticles, and at the same time, the outer peripheral part of the wiring can be coated with the silicon compound. Therefore, there is an advantage that the metal forming the wiring can be protected from moisture or from oxidation by the silicon compound at the outer peripheral part of the wiring. In the present invention, the reduction treatment of the silicon compound coated precursor microparticles or the silicon doped precursor microparticles may be performed by a dry method or a wet method.

In the case of obtaining silicon compound coated metal microparticles by reduction of silicon compound coated precursor microparticles or silicon doped precursor microparticles, a particle diameter of the precursor microparticles in the silicon compound coated precursor microparticles is preferably 100 nm or less, and a particle diameter of the silicon doped precursor microparticles is preferably 100 nm or less. The microparticles being 100 nm or less respectively are advantageous, not only in that the uniform reduction treatment to prepare the silicon compound coated metal microparticles is enabled, but also in that even a base metal can be reduced to produce metal microparticles though conventionally only a method such as electric reduction using large energy such as electricity can reduce a base metal.

In the silicon compound coated precursor microparticles of the present invention, it is preferable that the average primary particle diameter of the silicon compound coated precursor microparticles is 100.5% or more and 190% or less relative to the average primary particle diameter of the precursor microparticles before coating by the silicon compound. When the silicon compound coating on the precursor microparticles is too thin, the particle diameter of the silicon compound coated metal microparticles may become coarse easily upon reduction to form the silicon compound coated metal microparticles. Thus, it is preferable that the average primary particle diameter of the silicon compound coated metal microparticles is not less than 100.5% relative to the average primary particle diameter of the metal microparticles. When the coating is too thick, or when a coarse aggregate is coated, control of reduction of the precursor is difficult. Thus, it is preferable that the average primary particle diameter of the silicon compound coated metal microparticles is not more than 190% relative to the average primary particle diameter of the metal microparticles. The silicon compound coated metal microparticles of the present invention may be core/shell type silicon compound coated metal microparticles in which the entire surface of the core metal microparticle is uniformly coated with the silicon compound. The silicon compound coated precursor microparticles are preferably silicon compound coated precursor microparticles in which a plurality of the precursor microparticles are not aggregated and at least a part of a surface of a single precursor microparticle is coated with the silicon compound. But, the silicon compound coated precursor microparticles may be silicon compound coated precursor microparticles in which at least a part of a surface of an aggregate in which a plurality of precursor microparticles are aggregated, is coated with a silicon compound. In this case, however, silicon compound coated metal microparticles in which at least a part of a surface of a single metal microparticle is coated with a silicon compound, are more preferable than silicon compound coated metal microparticles in which an aggregate exceeding a certain size is coated with a silicon compound, because effects of characteristics such as dispersibility can be easily obtained. Here, the aggregates exceeding a certain size refer to those which size is, for example, more than 100 nm. And, it is preferable that the particle diameter of the silicon compound coated precursor microparticles in which at least a part of a surface of an aggregate wherein a plurality of precursor microparticles are aggregated, is coated with a silicon compound is 100.5% or more and 190% or less relative to the particle diameter of the aggregates. Here, a diameter of the aggregates refers to a maximum distance between two points on the outer periphery of the aggregates.

### (Explanation of amorphous silicon oxide)

In the present invention, the silicon compound coating at least a part of a surface of a precursor microparticle preferably contains an amorphous silicon oxide. When the silicon compound is amorphous, a random bonding state is formed in the silicon compound, and a reduction substance such as hydrogen or a molecule of the reduction substance enters into the inside of the coating silicon compound. By the effect, there are advantages that reduction of the precursor microparticles to the metal is easily controlled, and reduction to the silicon compound coated metal microparticles and control of the particle diameter of the obtained silicon compound metal microparticles can be strictly performed. The silicon compound in the obtained silicon compound coated metal microparticles contains an amorphous silicon compound. When the silicon compound is amorphous, there is an advantage that characteristics of the silicon compound coated metal microparticles described later can be easily and strictly controlled.

### (Explanation of amorphous precursor)

In the present invention, the precursor constituting the silicon compound coated precursor microparticles preferably contains an amorphous precursor. The precursor being amorphous is advantageous, in that a reduction substance such as hydrogen or a molecule of the reduction substance is likely to act on the precursor microparticles having a random binding state, and in that even a base metal which cannot be reduced by a method such as a reduction by a liquid phase method, can be reduced to a metal or metalloid simple substance, and in that a particle diameter of the obtained silicon compound metal microparticles can be strictly controlled.

A method of evaluating that the silicon compound or precursor contains an amorphous silicon oxide is not particularly limited. However, the examples include a method of evaluating in combination of confirmation of presence of Si or M being a metal element or metalloid element and O being oxygen by an STEM mapping, and confirmation of presence of silicon oxide by an infrared absorption spectrum, and confirmation that a peak derived from crystalline silica (SiO₂) or crystalline precursor is not observed in an XRD measurement; and a method of confirming that a crystal lattice is not observed in a site where Si or M and O are detected in TEM observation or STEM observation, and the like.

In the silicon compound coated metal microparticles of the present invention, as in the case of the silicon compound coated precursor microparticles, it is preferable that the average primary particle diameter of the silicon compound coated metal microparticles is 100.5% or more and 190% or less relative to the average primary particle diameter of the metal microparticles. When the silicon compound coating on the metal microparticles is too thin, effects on the characteristics possessed by the silicon compound coated metal microparticles cannot be exhibited. Thus, it is preferable that the average primary particle diameter of the silicon compound coated metal microparticles is not less than 100.5% relative to the average primary particle diameter of the metal microparticles. When the coating is too thick, or when a coarse aggregate is coated, control of the characteristics is difficult. Thus, it is preferable that the average primary particle diameter of the silicon compound coated metal microparticles is not more than 190% relative to the average primary particle diameter of the metal microparticles. Various compositions of the present invention include metal microparticles in which at least a part of the surface is coated with a silicon compound, namely, silicon compound coated metal microparticles themselves. The silicon compound coated metal microparticles of the present invention may be core/shell type silicon compound coated metal microparticles in which the entire surface of the core metal microparticle is uniformly coated with the silicon compound. The silicon compound coated metal microparticles are preferably silicon compound coated metal microparticles in which a plurality of the metal microparticles are not aggregated and at least a part of a surface of a single metal microparticle is coated with the silicon compound. But, the silicon compound coated metal microparticles may be silicon compound coated metal microparticles in which at least a part of the surface of an aggregate in which a plurality of metal microparticles are aggregated, is coated with the silicon compound. In this case, however, silicon compound coated metal microparticles in which at least a part of a surface of a single metal microparticle is coated with a silicon compound, are more preferable than silicon compound coated metal microparticles in which an aggregate exceeding a certain size is coated with a silicon compound, because effects of characteristics such as dispersibility can be easily obtained. Here, the aggregates exceeding a certain size refer to those which size is, for example, more than 1 µm. And, it is preferable that the particle diameter of the silicon compound coated metal microparticles in which at least a part of a surface of an aggregate wherein a plurality of metal microparticles are aggregated, is coated with a silicon compound is 100.5% or more and 190% or less relative to the particle diameter of the aggregates.

### (Correspondence relation with priority claimed application)

The inventors of the present invention have found that the silicon compound coated metal microparticles can be prepared by a reduction treatment of silicon compound coated precursor microparticles or silicon doped precursor microparticles, and have accomplished the present invention. It is also disclosed in JP application 2016-111346 of a priority claimed application of the present application, to coat a surface of various microparticles with a silicon compound, and to obtain silicon compound coated metal oxide microparticles wherein the silicon compound is a silicon oxide, which can be a precursor of silicon compound coated metal microparticles. The inventors have found that this can be reduced to a metal under a reduction atmosphere. The inventors of the present invention have further found, as disclosed in PCT/JP2016/83001 of another priority claimed application of the present application, that by controlling the Si-OH bonds contained in the silicon compound coated metal microparticles under a reduction atmosphere, the silicon compound coated precursor microparticles can be reduced to the silicon compound coated metal microparticles, and a particle diameter of the silicon compound coated metal microparticles can be controlled by a treatment condition.

The silicon compound coated metal microparticles of the present invention contain at least silicon (Si). A method of evaluating that silicon (Si) is contained, is preferably a method of observing a plurality of particles using a transmission electron microscope (TEM) or a scanning transmission electron microscope (STEM), and confirming a presence ratio and presence position of silicon relative to elements other than silicon in each particle by an energy dispersive X-ray analyzer (EDS). The examples include a method of evaluating uniformity by specifying a presence ratio (molar ratio) of silicon and elements other than silicon contained in a single silicon compound coated metal microparticle and calculating an average value of the mole ratio and its variation coefficient in the plurality of silicon compound coated metal microparticles, or a method of specifying a presence position of silicon contained in the silicon compound coated metal microparticles by mapping. The silicon compound coated metal microparticles of the present invention are preferably silicon compound coated metal microparticles in which silicon is detected in the vicinity of the surface layer of the particles in the STEM mapping or linear analysis. There is an advantage that chemical stability such as water resistance and acid / alkali resistance can be imparted to the metal microparticles by coating a surface of the metal microparticles with a silicon compound.

By using the above production method of the silicon compound coated metal microparticles of the present invention, a metal or metalloid element whose reduction reaction is difficult in a conventional liquid phase reduction method can be reduced, and in addition a coating state such as coating thickness of a silicon compound in the obtained silicon compound coated metal microparticles, and an existence ratio of an oxide, and the like can be strictly controlled. Therefore, it has been found that the silicon compound coated metal microparticles can be suitably used for the above various compositions, because characteristics of the silicon compound coated metal microparticles such as stability of the microparticles themselves and storage stability in a state of powders can be controlled. In addition to the above characteristics, absorption characteristics, transmission characteristics, reflection characteristics, plasmon characteristics and the like with respect to electromagnetic waves such as a ultraviolet ray, visible light, near infrared ray and the like are controlled, so that the silicon compound coated metal microparticles can be suitably used for a transparent material composition for the purpose for a glass, film, transparent resin and the like, or a composition for coating such as a coating film and coated body. In addition, when silicon compound coated metal microparticles wherein a surface of a metal microparticle composed of at least one of metal elements or metalloid elements is coated with a silicon compound is used as a magnetic material composition, nano-sized magnetic domains insulated by a silicon compound, and isolated magnetic anisotropy can be controlled, and consequently a holding power can be controlled. Namely, the magnetic material composition is suitable to the extent that it is not conventionally seen as a magnetic material composition. The magnetic material composition is also suitable as an internal electrode of an electronic component. For example, when it is used as an internal electrode of a multilayer ceramic capacitor, after processing a dispersion into a multilayer coating film, the multilayer coating film is sintered under a reduction atmosphere, and at the time of sintering, the silicon compound moves to a surface layer of the electrode, and a thin insulator layer is formed at the boundary between the electrode layer and the dielectric layer, and consequently performance of the multilayer ceramic capacitor is largely improved. In the case that the silicon compound coated metal microparticles are used as the magnetic material composition or the internal electrode material, slurry formation is an important factor, and slurry formation to a state of being dispersed in an appropriate dispersion medium without aggregation. A coating state of the silicon compound in the silicon compound coated metal microparticles, or presence of an oxide and the like, affects a state of coating film formation or a state after sintering by a sintering condition, and is also an important factor for controlling dispersibility, a processing state of water evaporation and reduction at a sintering temperature under a sintering atmosphere, and insulation.

Furthermore, in the case of silicon compound coated metal microparticles having semiconductor characteristics, semiconductor characteristics such as conductivity, insulation or their temperature dependency are controlled, so that they are preferably used for semiconductor compositions. Although factors for enabling these control are uncertain, a bond terminal part where a free electron moves around freely in a bond such as Si-Si of two silicons being a metalloid element, or between atoms such as Si-M of silicon atom (Si) and M being another metal or metalloid element, namely on a surface of a particle, is in an activated state, because the free electron loses its way, and thus is in a state that a new bond can be always generated. The inventors of the present application consider that a metal element including an activated electron or a metalloid element such as silicon generates a bond with, for example, surrounding oxygen, and the resulting silicon-oxygen bond (Si-O bond) or metal-oxygen bond (M-O Bond) further reacts with another element and functional group, so that it changes to a most stable bond under an environment where a particle is placed, such as silicon-hydroxyl bond (Si-OH bond) or metal-hydroxyl bond (M-OH bond). Namely, the inventors of the present application have found that when a microparticle is smaller, influence to characteristics of the microparticles by a coating state of the silicon compound coated metal microparticles or on a surface of the silicon compound coated metal microparticles, and an existence ratio of an oxide, and position of silicon contained in the metal microparticles are larger, so that characteristics of the silicon compound coated metal microparticles can be strictly controlled by using the method of producing silicon compound coated metal microparticles of the present invention.

A coating state of the silicon compound contained in the silicon compound coated metal microparticles of the present invention, can control various characteristics such as dispersibility of the silicon compound coated metal microparticles, by controlling a ratio of Si-OH bonds contained in the silicon compound, or a ratio of Si-OH bonds / Si-O bonds which is a ratio of Si-OH bonds relative to Si-O bonds, in addition to the TEM, STEM, and the like. The ratio of Si-OH bonds or the ratio of Si-OH bonds / Si-O bonds can be determined based on the FT-IR measurement results as an example. Here, IR is an abbreviation of infrared absorption spectroscopy (hereinafter, simply referred to as IR). In addition, methods other than IR measurement include an X-ray photoelectron spectroscopy (XPS), solid nuclear magnetic resonance (solid NMR), electron energy loss spectroscopy (EELS), and the like.

In the case of using the silicon compound coated metal microparticles of the present invention as a catalyst, catalytic ability can be controlled by controlling a coating state of the silicon compound coated metal microparticles, in addition to the control of dispersibility. For example, in the case of using in a liquid, a coating ratio is controlled by dissolving at least a part of the silicon compound coating the surface at the time of use, and a surface active site of the coated metal microparticles is exposed by dissolving the silicon compound coating, and thereby a catalytic ability of the metal microparticles is exerted or improved. In this case, solubility or dissolution rate of the silicon compound coating at least a part of a surface of metal microparticles in the liquid can be controlled by controlling the coating state of the silicon compound in the silicon compound coated metal microparticles and the existence ratio of an oxide, in order to control the catalytic ability. Characteristics of the catalyst can be controlled and improved, so that the silicon compound coated metal microparticles can be suitably used for a catalyst composition. Similarly, in the case of using the silicon compound coated metal microparticles of the present invention as a reaction material such as an oxidation agent, a reduction agent and the like, solubility or dissolution rate of the silicon compound coating at least a part of a surface of metal microparticles in the liquid can be controlled, and an intended reaction between the metal microparticles contained in the silicon compound coated metal microparticles and a reactant can be controlled, and a yield or selectivity of a reaction product can be improved, so that the silicon compound coated metal microparticles can be suitably used for a reaction composition.

In the present invention, a primary particle diameter of the metal microparticles in the silicon compound coated metal microparticles is preferably 1 µm or less, more preferably 1 nm or more and 0.5 µm or less. A primary particle diameter of the coated silicon compound coated metal microparticles is also preferably 1 µm or less, more preferably 1 nm or more and 0.5 µm or less. It is assumed that characteristics of the silicon compound coated metal microparticles can be strictly controlled by strictly controlling a coating state of the silicon compound and an existence ratio of an oxide in the silicon compound coated metal microparticles, and that the silicon compound coated metal microparticles having a primary particle diameter of 1 µm or less have surface areas greater than the silicon compound coated metal microparticles having a primary particle diameter of more than 1 µm. Thereby, it is understood that influence to characteristics of the silicon compound coated metal microparticles by controlling a coating state of the silicon compound in the silicon compound coated metal microparticles, or an existence ratio of an oxide, or the like, is large. Therefore, in the silicon compound coated metal microparticles having a primary particle diameter of 1 µm or less, it is an advantage that predetermined characteristics (particularly suitable characteristics for use as a composition for coating for use in a coating film, coated body or the like, a composition for a transparent material for use in a coated body required to have transparency, a glass, a transparent resin or a film, a magnetic material composition for use in a magnetic material such as a magnetic fluid, a semiconductor composition for use in a semiconductor or the like, a conductive composition for use as a conductive material, a reaction composition for use in a reaction material or the like, or a catalyst composition for use as a catalyst material) can be exerted by controlling a particle diameter of the silicon compound coated metal microparticles, or a coating state of the silicon compound, or an existence ratio of an oxide, or the like.

### EXAMPLE

Hereinafter, the present invention is explained in more detail with reference to examples, but the present invention is not limited only to these examples. Pure water having conductivity of 0.84 µS/cm (measurement temperature: 25 °C) was used for pure water in the following examples, unless otherwise noted.

### (Preparation of TEM observation sample and preparation of STEM observation sample)

The silicon compound coated metal microparticles obtained in Examples were dispersed in a dispersion medium, and the resulting dispersion was dropped to a collodion membrane, and dried to prepare a TEM observation sample or an STEM observation sample.

### (Transmission electron microscopy and energy dispersive X-ray analyzer: TEM-EDS analysis)

For observation and quantitative analysis of the silicon compound coated metal microparticles by TEM-EDS analysis, the transmission electron microscopy JEM-2100 (JEOL Ltd.) equipped with the energy dispersive X-ray analyzer JED-2300 (JEOL Ltd.) was used. The observation condition was the acceleration voltage of 80 kV, and the observation magnification of 25,000 times or more. The particle diameters were calculated from the maximum distance between two points on the outer periphery of the silicon compound coated metal microparticles observed by TEM, and the average value of the measured particle diameters of 100 particles (average primary particle diameter) was calculated. A molar ratio of the elemental components contained in the silicon compound coated metal microparticles was calculated by TEM-EDS, and the average value of the results of calculated molar ratio for 10 or more particles was calculated.

### (Scanning transmission electron microscopy and energy dispersive X-ray analyzer: STEM-EDS analysis)

For the mapping and quantification of elements contained in the silicon compound coated metal microparticles by STEM-EDS analysis, the atomic resolution analytical electron microscopy JEM-ARM200F (JEOL Ltd.) equipped with the energy dispersive X-ray analyzer Centurio (JEOL Ltd.) was used. The observation condition was the acceleration voltage of 80 kV and the observation magnification of 50,000 times or more, and a beam diameter of 0.2 nm was used for analysis.

### (X-ray diffraction measurement)

For the X-ray diffraction (XRD) measurement, the powder X-ray diffractometer Empyrean (Spectris Co., Ltd., PANalytical Division) was used. The measurement condition was measurement range of 10 to 100 [°2Theta], Cu anticathode, tube voltage of 45 kV, tube current of 40 mA, and scanning speed of 0.3 °/min. The XRD was measured using the dry powder of the silicon compound coated metal microparticles obtained in each Example.

### (Example 1)

In Example 1, silicon compound coated silicon aluminum doped iron oxide microparticles were prepared as silicon compound coated precursor microparticles. A precursor raw material liquid (liquid A), a precursor precipitation solvent (liquid B), and a silicon compound raw material liquid (liquid C) were prepared using the high-speed rotary dispersion emulsification apparatus CLEAMIX (product name: CLM-2.2 S, M. Technique Co., Ltd.). Specifically, based on the formulation of the precursor raw material liquid shown in Example 1 of Table 1, the components of the precursor raw material liquid were mixed homogeneously by stirring using CLEARMIX at preparation temperature of 50 °C and at the rotor rotational speed of 20,000 rpm for 30 min to prepare the precursor raw material liquid. Based on the formulation of the precursor precipitation solvent shown in Example 1 of Table 2, the components of the precursor precipitation solvent were mixed homogeneously by stirring using CLEARMIX at preparation temperature of 25 °C and at the rotor rotational speed of 8,000 rpm for 30 min to prepare the precursor precipitation solvent. Based on the formulation of the silicon compound raw material liquid shown in Example 1 of Table 3, the components of the silicon compound raw material liquid were mixed homogeneously by stirring using CLEARMIX at preparation temperature of 20 °C and at the rotor rotational speed of 6,000 rpm for 10 min to prepare the silicon compound raw material liquid. Regarding the substances represented by the chemical formula and abbreviations set forth in Tables 1 to 3, MeOH is methanol (Mitsubishi Chemical Corporation), NaOH is sodium hydroxide (Kanto Kagaku Co., Inc.), TEOS is tetraethyl orthosilicate (Wako Pure Chemical Industry Ltd.), Fe(NO₃)₃·9H₂O is iron nitrate nonahydrate (Kanto Kagaku Co., Ltd.), and Al(NO₃)₃·9H₂O is aluminum nitrate nonahydrate (Kanto Kagaku Co., Ltd.).

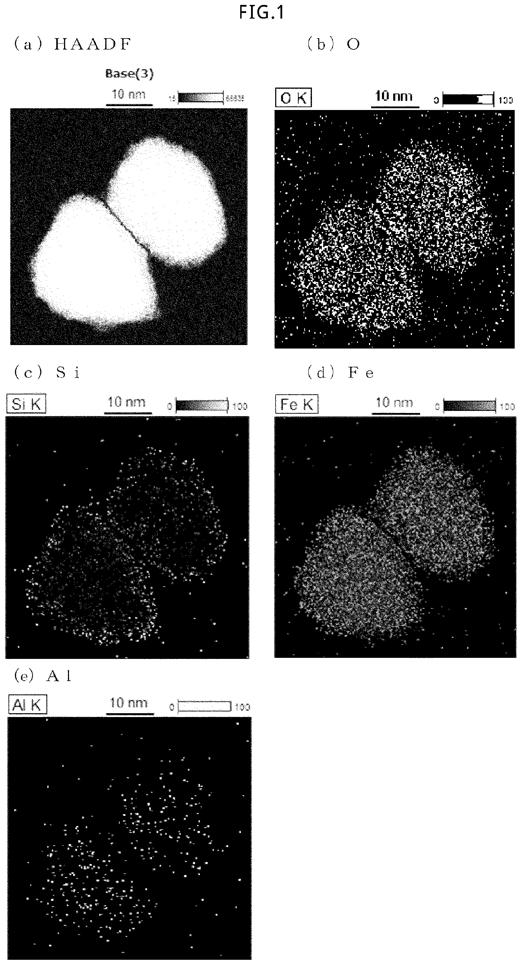

Then, the prepared precursor raw material liquid, the precursor precipitation solvent and the silicon compound raw material liquid were mixed using the fluid processing apparatus described in Patent Literature 4 filed by the present applicant. Here, the fluid processing apparatus described in Patent Literature 4 is an apparatus described in FIG 1(B) of Patent Literature 4, wherein the openings of the second and third introduction parts d20, d30 have concentric annular shapes which are surrounding the central opening of the processing surface 2 which is a ring-shaped disc, which was used. Specifically, the precursor raw material liquid or the precursor precipitation solvent as liquid A was introduced from the first introduction part d1 into the space between the processing surfaces 1 and 2, and while driving the processing member 10 at a rotational speed of 1,130 rpm, as liquid B the other liquid of the precursor raw material liquid and the precursor precipitation solvent other than the liquid sent as liquid A was introduced from the second introduction part d2 into the space between the processing surfaces 1 and 2, and the precursor raw material liquid and the precursor precipitation solvent were mixed in the thin film fluid, to let the core precursor microparticles be precipitated in the space between the processing surfaces 1 and 2. Then, the silicon compound raw material liquid as liquid C was introduced from the third introduction part d3 into the space between the processing surfaces 1 and 2, and liquid C was mixed with a mixed fluid containing the core precursor microparticles in the thin film fluid. The silicon compound was precipitated on the surface of the core precursor microparticles. The discharge liquid containing the silicon compound coated precursor microparticles (hereinafter, the silicon compound coated precursor microparticle dispersion) was discharged from the space between the processing surfaces 1 and 2 of the fluid processing apparatus. The silicon compound coated precursor microparticle dispersion was collected in the beaker b through the vessel v.

Table 4 shows the operating conditions of the fluid treatment apparatus, and the molar ratios of Si/M calculated from TEM-EDS analysis of the obtained silicon compound coated precursor microparticles, and the calculated values calculated from the formulations and introduction flow rates of liquid A, liquid B and liquid C. However, in Example 1, the molar ratios Si/M is Si/(Fe+Al), and the amount of Si is the sum of Si contained in the core and shell. The introduction temperatures (liquid sending temperatures) and the introduction pressures (liquid sending pressures) of liquid A, liquid B and liquid C shown in Table 4 were measured using a thermometer and a pressure gauge provided in a sealed inlet path leading to the space between the processing surfaces 1 and 2 (the first introduction part d1, the second introduction part d2 and the third introduction part d3). The introduction temperature of liquid A shown in Table 4 is the actual temperature of liquid A under the introduction pressure in the first introduction part d1. Similarly, the introduction temperature of liquid B shown in Table 4 is the actual temperature of liquid B under the introduction pressure in the second introduction part d2. The introduction temperature of liquid C shown in Table 4 is the actual temperature of liquid C under the introduction pressure in the third introduction part d3.

For the pH measurement, the pH meter, model number D-51 manufactured by HORIBA Ltd. was used. The pHs of liquid A, liquid B and liquid C were measured at room temperature prior to introduction into the fluid processing apparatus. Further, it is difficult to measure the pH of the mixed fluid immediately after mixing the precursor raw material liquid and the precursor precipitation solvent, and the pH of the mixed fluid immediately after mixing the fluid containing the core precursor microparticles and the silicon compound raw material liquid. Therefore, the silicon compound coated precursor microparticle dispersion was discharged from the apparatus and collected in the beaker b, and the pH of the liquid was measured at room temperature.

Dry powders and wet cake samples were prepared from the silicon compound coated precursor microparticle dispersion which was discharged from the fluid processing apparatus, and collected in the beaker b. The preparation method was conducted according to a conventional method of this type of processing. The discharged silicon compound coated precursor microparticle dispersion was collected, and the silicon compound coated precursor microparticles were settled, and the supernatant was removed. Thereafter, the silicon compound coated precursor microparticles were washed and settled repetitively with 100 parts by weight of pure water, and then, were washed and settled repetitively until the conductivity of the cleaning liquid containing the silicon compound coated precursor microparticles reached 10 µS/cm or less. A part of the finally obtained wet cake of the silicon compound coated precursor microparticles was dried at 25 °C at -0.10 MPaG for 20 hours to obtain the dry powders. The rest was the wet cake sample. Silicon compound coated precursor microparticles were prepared under the conditions shown in Comparative Example 1 in Tables 1 to 4 using the same method as in Example 1. An average primary particle diameter of the silicon compound coated precursor microparticles prepared in Example 1 was 8.8 nm. and the silicon compound coated precursor microparticles prepared in Comparative Example 1 was observed in the state of coated coarse aggregates, and an average primary particle diameter was 439 nm. In both Example 1 and Comparative Example 1, it was confirmed using XRD and FT-IR that the silicon compound contained amorphous silicon oxide.

**[Table 1]**

| | Formulation of the 1st fluid (liquid A: precursor raw material liquid) | | | | | | | | | |
|---|---|---|---|---|---|---|---|---|---|---|
| | Formulation | | | | | | | | pH | |
| | Raw material | [wt%] | Raw material | [wt%] | Raw material | [wt%] | Raw material | [wt%] | pH | [°C] |
| Example 1 | Fe(NO₃)₃˙ 9H₂O | 3.000 | TEOS | 0.286 | Al(NO₃)₃˙ 9H₂O | 0.056 | Pure water | 96.658 | 0.48 | 19.3 |
| Comparative Example 1 | Fe(NO₃)₃˙ 9H₂O | 2.000 | TEOS | 0.191 | Al(NO₃)₃˙ 9H₂O | 0.037 | Pure water | 97.772 | 0.88 | 19.9 |

**[Table 2]**

| | Formulation of the 2nd fluid (liquid B: precursor precipitation solvent) | | | | | |
|---|---|---|---|---|---|---|
| | Formulation | | | | pH | |
| | Raw material | [wt%] | Raw material | [wt%] | pH | [°C] |
| Example 1 | NaOH | 13.5 | Pure water | 86.5 | >14 | - |
| Comparative Example 1 | NaOH | 5.5 | Pure water | 94.5 | >14 | - |

**[Table 3]**

| | Formulation of the 3rd fluid (liquid c: silicon compound raw material liquid) | | | | | |
|---|---|---|---|---|---|---|
| | Formulation | | | | pH | |
| | Raw material | [wt%] | Raw material | [wt%] | pH | [°C] |
| Example 1 | MeOH | 99.5361 | TEOS | 0.4639 | 4.98 | 19.1 |
| Comparative Example 1 | MeOH | 99.7836 | TEOS | 0.2164 | 5.63 | 18.6 |

**[Table 4]**

| | Introduction flow rate (liquid sending flow rate) | | | Introduction temperature (liquid sending temperature) | | | Introduction pressure (liquid sending pressure) | | | Discharged liquid | | Si(core+shell)/M(Fe+Al) [molar ratio] | | | |
|---|---|---|---|---|---|---|---|---|---|---|---|---|---|---|---|
| | [ml/min] | | | [°C] | | | [MPaG] | | | pH | Tempe rature [°C] | [Calculated value] | | [EDS] | |
| | Liquid A | Liquid B | Liquid C | Liquid A | Liquid B | Liquid C | Liquid A | Liquid B | Liquid C | | | Si | M | Si | M |
| Example 1 | 400 | 40 | 50 | 141 | 89 | 88 | 0.415 | 0.20 | 0.20 | 11.69 | 23.9 | 6.8 | 93.2 | 6.9 | 93.1 |
| Comparative Example 1 | 600 | 98 | 107 | 50 | 48 | 20 | 0.113 | 0.15 | 0.15 | 11.36 | 22.6 | 6.8 | 93.2 | 8.6 | 95.1 |

The silicon compound coated silicon aluminum doped iron oxide microparticles as silicon compound coated precursor microparticles obtained in Example 1 were subjected to a heat treatment in a reduction furnace while argon gas containing hydrogen as a reduction atmosphere was flowed into the reduction furnace. Table 5 shows hydrogen concentrations in the gas flowing in the reduction furnace, treatment temperatures, treatment times, and average primary particle diameters of the obtained silicon compound coated metal microparticles.

**[Table 5]**

| | Reduction atmosphere condisions | | | | Average primary particle diameter [nm] |
|---|---|---|---|---|---|
| | Hydrogen concentration [%] | Gas flow [L/min] | Treatment temperature [°C] | Treatment time [min] | |
| Example 1-1 | 3 | 5 | 400 | 30 | 23.1 |
| Example 1-2 | 3 | 5 | 450 | 30 | 24.6 |
| Example 1-3 | 3 | 5 | 500 | 30 | 23.9 |
| Example 1-4 | 3 | 5 | 550 | 30 | 24.6 |
| Example 1-5 | 3 | 5 | 600 | 30 | 36.4 |
| Example 1-6 | 3 | 5 | 600 | 60 | 116.4 |
| Example 1-7 | 3 | 5 | 600 | 90 | 236.4 |
| Example 1-8 | 3 | 5 | 650 | 60 | 346.2 |

FIG 1 shows an STEM mapping result of the silicon compound coated silicon aluminum doped iron microparticles obtained in Example 1-5. In FIG 1, (a) shows a mapping result of a dark-field (HAADF), (b) shows a mapping result of oxygen (O), (c) shows a mapping result of silicon (Si), (d) shows a mapping result of iron (Fe), and (e) shows a mapping result of aluminum (Al). As seen from FIG 1, it is understood that the surface of the silicon aluminum doped iron microparticles is coated with the silicon compound containing silicon oxide. Also, interference fringes of crystal lattice were not observed at the site where silicon coating the surface was detected, so that it was considered that the silicon compound coating the surface was amorphous. Similar STEM mapping results were also obtained for Examples 1-1 to 1-4 and Examples 1-6 to 1-8. FIG 4 shows an STEM mapping result of the silicon compound coated silicon aluminum doped iron microparticles obtained in Example 1-8. It was confirmed that when a treatment temperature rose or a treatment time was prolonged, a particle diameter of the silicon compound coated silicon aluminum doped iron oxide microparticle increased. It was also confirmed that silicon contained in the silicon compound coated silicon aluminum doped iron microparticles was transferred in the vicinity of the surface layer of the particles.

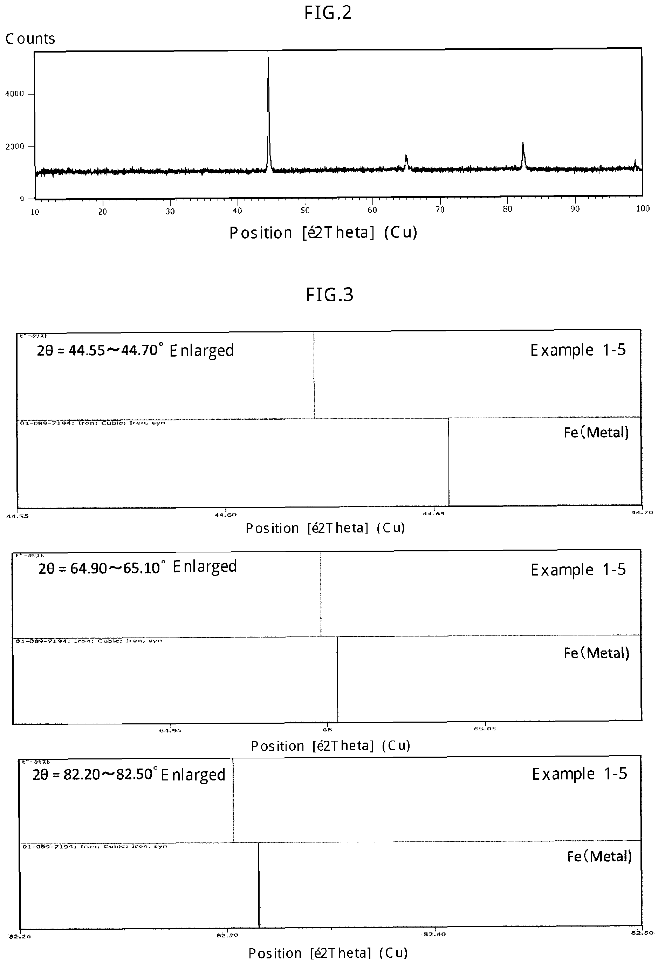

Based on the XRD measurement results, peaks of an oxide such as magnetite were also observed in the silicon compound coated silicon aluminum doped iron microparticles obtained under the conditions of Examples 1-1 to 1-3. However, no peaks of an oxide were observed in the silicon aluminum doped iron microparticles obtained in Examples 1-4 to 1-8, and peaks similar to the peaks of only iron were observed. FIG 2 shows the measurement results of Example 1-5 as a representative. FIG 3 shows the peak positions of iron (Fe: Metal) in the database with respect to the peak list of the measurement result shown in FIG 2 on the charts enlarging the regions around the peaks. As shown in FIG 3, it is understood that the XRD measurement result of the silicon aluminum doped iron microparticles obtained in Example 1-5 shows that the peaks are close to the peaks of iron, but the peak positions of iron itself are shifted. It is considered that the XRD measurement result was obtained by forming silicon aluminum doped iron microparticles in which iron, silicon and aluminum formed a solid solution.

As seen from Table 5, the silicon compound coated metal microparticles can be obtained by treating the silicon compound coated precursor microparticles under a reduction atmosphere, and a particle diameter of the silicon compound coated metal microparticles can be controlled by controlling a treatment temperature and a treatment time. Also, the silicon compound coated precursor microparticles obtained in Comparative Example 1 were subjected to the same reduction treatment as in Example 1, but reduction was insufficient under any conditions, and the silicon compound coated metal microparticles of the present invention were not obtained.

In the following Examples 2 and 3, silicon compound coated metal microparticles were prepared by changing the metal element in the silicon compound coated metal microparticles (Example 2) or by changing the treatment apparatus (Example 3).

### (Example 2)

Example 2 describes a method of producing silicon compound coated silicon microparticles in which at least a part of a surface of a silicon microparticle as a metalloid microparticle is coated with a silicon compound, by subjecting to a reduction treatment silicon oxide microparticles being silicon compound coated precursor microparticles or silicon doped precursor microparticles. Preparation conditions are shown in Tables 6 to 8. The other conditions were the same as in Example 1. However, since the third fluid (liquid C) was not used in Example 2, a device not having a flow path for introducing the third fluid in the device of Patent Literature 4 was used. An average primary particle diameter of the silicon compound precursor microparticles obtained in Example 2 was 25.9 nm. The silicon compound precursor microparticles obtained in Comparative Example 2 were observed as coated coarse aggregates, and an average primary particle diameter of the microparticles was 552 nm. It was confirmed in both Example 2 and Comparative Example 2 using STEM, XRD and FT-IR, that the silicon compound contained an amorphous silicon oxide and that the silicon oxide microparticles as precursor microparticles contained amorphous silicon oxide. Table 9 shows the hydrogen concentrations in the gas flowing into the reduction furnace, the treatment temperatures, the treatment times, and the average primary particle diameters of the obtained silicon compound coated metal microparticles. Regarding the substances represented by the chemical formula and abbreviations set forth in Tables 6 and 7, as substances different from the substances shown in Tables 1 to 3, 60% HNO₃ is concentrated nitric acid (Kishida Chemical Co., Ltd.), Na₂SiO₃·9H₂O is sodium metasilicate nonahydrate (Wako Pure Chemical Industry Ltd.), and the same substances as in Example 1 were used for the other substances other than the above.

**[Table 6]**

| | Formulation of the 1st fluid (liquid A: precursor precipitation solvent) | | | | | |
|---|---|---|---|---|---|---|
| | Formulation | | | | pH | |
| | Raw material | [wt%] | Raw material | [wt%] | pH | [°C] |
| Example 2 | 60%HNO₃ | 0.080 | MeOH | 99.920 | 0.47 | 22.9 |
| Comparative Example 2 | 60%HNO₃ | 0.300 | MeOH | 99.700 | 0.77 | 25.9 |

**[Table 7]**

| | Formulation of the 2nd fluid (liquid B: precursor raw material liquid) | | | | | |
|---|---|---|---|---|---|---|
| | Formulation | | | | pH | |
| | Raw material | [wt%] | Raw material | [wt%] | pH | [°C] |
| Example 2 | Na₂SiO₃·9H₂O | 0.5 | Pure water | 99.5 | 12.1 | 24.1 |
| Comparative Example 2 | Na₂SiO₃·9H₂O | 5.0 | Pure water | 95.0 | 12.2 | 24.8 |

**[Table 8]**

| | Introduction flow rate (liquid sending flow rate) | | Introduction temperature (liquid sending temperature) | | Introduction pressure (liquid sending pressure) | | Discharged liquid | |
|---|---|---|---|---|---|---|---|---|
| | [ml/min] | | [°C] | | [MPaG] | | pH | Temperature [°C] |
| | Liquid A | Liquid B | Liquid A | Liquid B | Liquid A | Liquid B | | |
| Example 2 | 500 | 150 | 25 | 25 | 0.074 | 0.10 | 11.35 | 24.7 |
| Comparative Example 2 | 550 | 40 | 26 | 25 | 0.052 | 0.10 | 9.67 | 21.4 |

**[Table 9]**

| | Reduction atmosphere condisions | | | | Average primary particle diameter [nm] |
|---|---|---|---|---|---|
| | Hydrogen concentration [%] | Gas flow [L/min] | Treatment temperature [°C] | Treatment time [min] | |
| Example 2-1 | 3 | 5 | 300 | 60 | 46.5 |
| Example 2-2 | 3 | 5 | 350 | 60 | 55.9 |
| Example 2-3 | 3 | 5 | 400 | 60 | 61.9 |

The same analysis results as in Example 1 were obtained from STEM and XRD results by the reduction treatment in Example 2. From Table 9, the same conclusion as in Example 1 was obtained also in Example 2. In Example 2, silicon microparticles existed in the furnace at the time of completion of the treatment under the reduction atmosphere condition, and silicon compound coated silicon microparticles were prepared by oxidizing the surface when replacing with the atmospheric atmosphere. A reduction treatment of the silicon compound coated precursor microparticles obtained in Comparative Example 2 did not produce the silicon compound coated metal microparticles of the present invention.

### (Example 3)

In Example 3, the silicon compound coated precursor microparticles were prepared in the same manner as in Example 1 except for using an apparatus described in JP 2009-112892, and using a method of mixing and reacting liquid A, liquid B and liquid C. Here, the apparatus of JP 2009-112892 was an apparatus described in FIG 1 of JP 2009-112892, and the inner diameter of the stirring tank was 80 mm, and the gap between the outer end of the mixing tool and the inner peripheral surface of the stirring tank was 0.5 mm, and the rotor rotational speed of the stirring blade was 7,200 rpm. Further, liquid A was introduced into the stirring tank, and liquid B was added, mixed and reacted in the thin film consisting of liquid A that was crimped to the inner peripheral surface of the stirring tank. An average primary particle diameter of the silicon compound coated precursor microparticles obtained in Example 3 was 89.5 nm.

Table 10 shows the hydrogen concentrations in the gas flowing into the reduction furnace, the treatment temperatures, the treatment times, and the average primary particle diameters of the obtained silicon compound coated metal microparticles. The same analysis results as in Example 1 were obtained from STEM and XRD results by the reduction treatment in Example 3. The same conclusion as in Example 1 was obtained also in Example 3. Even when silicon compound coated precursor microparticles were prepared using a device different from the device described in Patent Literature 4, the silicon compound coated metal microparticles of the present invention were obtained.

**[Table 10]**

| | Reduction atmosphere condisions | | | | Average primary particle diameter [nm] |
|---|---|---|---|---|---|
| | Hydrogen concentration [%] | Gas flow [L/min] | Treatment temperature [°C] | Treatment time [min] | |
| Example 3-1 | 3 | 5 | 400 | 30 | 226.4 |
| Example 3-2 | 3 | 5 | 450 | 30 | 336.8 |
| Example 3-3 | 3 | 5 | 500 | 30 | 456.6 |
| Example 3-4 | 3 | 5 | 550 | 30 | 678.2 |

Reference Example 4 describes a method of producing silicon compound coated nickel microparticles in which at least a part of a surface of a nickel microparticle as a metal microparticle is coated with a silicon compound, by subjecting to a reduction treatment silicon compound coated nickel compound microparticles being silicon compound coated precursor microparticles. Preparation conditions are shown in Tables 11 to 14. The other conditions were the same as in Example 1. An average primary particle diameter of the silicon compound precursor microparticles obtained in Reference Example 4 was 8.5 nm. The silicon compound precursor microparticles obtained in Comparative Example 4 were observed as coated coarse aggregates, and an average primary particle diameter of the microparticles was 369 nm. It was confirmed in both Reference Example 4 and Comparative Example 4 using STEM, XRD and FT-IR, that the silicon compound contained an amorphous silicon oxide and that the nickel compound microparticles as precursor microparticles contained amorphous nickel hydroxide. Table 15 shows the hydrogen concentrations in the gas flowing into the reduction furnace, the treatment temperatures, the treatment times, and the average primary particle diameters of the obtained silicon compound coated metal microparticles. Regarding the substances represented by the chemical formula and abbreviations set forth in Tables 11 to 13, as substances different from the substances shown in Examples 1 to 3, Ni(NO₃)₂·6H₂O is nickel sulfate hexahydrate (Kanto Kagaku Co., Ltd.), and the same substances as in Examples 1 to 3 were used for the other substances other than the above.

**[Table 11]**

| | Formulation of the 1st fluid (liquid A: precursor raw material liquid) | | | | | |
|---|---|---|---|---|---|---|
| | Formulation | | | | pH | |
| | Raw material | [wt%] | Raw material | [wt%] | pH | [°C] |
| Example 4 | Ni(NO₃)_{2·}6H₂O | 2.000 | Pure water | 98.000 | 0.96 | 25.4 |
| Comparative Example 4 | Ni(NO₃)_{2·}6H₂O | 2.000 | Pure water | 98.000 | 0.96 | 25.4 |

**[Table 12]**

| | Formulation of the 2nd fluid (liquid B: precursor precipitation solvent) | | | | | |
|---|---|---|---|---|---|---|
| | Formulation | | | | pH | |
| | Raw material | [wt%] | Raw material | [wt%] | pH | [°C] |
| Example 4 | NaOH | 9.0 | Pure water | 91.0 | >14 | - |
| Comparative Example 4 | 28% aqueous ammonia | 100.0 | - | 0.0 | >14 | - |

**[Table 13]**

| | Formulation of the 3rd fluid (liquid c: silicon compound raw material liquid) | | | | | |
|---|---|---|---|---|---|---|
| | Formulation | | | | pH | |
| | Raw material | [wt%] | Raw material | [wt%] | pH | [°C] |
| Example 4 | MeOH | 99.1036 | TEOS | 0.8964 | 5.12 | 20.2 |
| Comparative Example 4 | MeOH | 99.1036 | TEOS | 0.8964 | 5.12 | 20.2 |

**[Table 14]**

| | Introduction flow rate (liquid sending flow rate) | | | Introduction temperature (liquid sending temperature) | | | Introduction pressure (liquid sending pressure) | | | Discharged liquid | | Si/M(Ni) [molar ratio] | | | |
|---|---|---|---|---|---|---|---|---|---|---|---|---|---|---|---|
| | [ml/min] | | | [°C] | | | [MPaG] | | | pH | Tempe rature [°C] | [Calculated value] | | [EDS] | |
| | Liquid A | Liquid B | Liquid C | Liquid A | Liquid B | Liquid C | Liquid A | Liquid B | Liquid C | | | Si | M | Si | M |
| Example 4 | 400 | 50 | 100 | 141 | 46 | 38 | 0.314 | 0.20 | 0.20 | 10.65 | 24.9 | 9.1 | 90.9 | 9.2 | 90.8 |
| Comparative Example 4 | 400 | 40 | 100 | 80 | 40 | 50 | 0.132 | 0.20 | 0.20 | 9.86 | 23.9 | 9.1 | 90.9 | 7.4 | 92.6 |

**[Table 15]**

| | Reduction atmosphere condisions | | | | Average primary particle diameter [nm] |
|---|---|---|---|---|---|
| | Hydrogen concentration [%] | Gas flow [L/min] | Treatment temperature [°C] | Treatment time [min] | |
| Example 4-1 | 3 | 5 | 200 | 60 | 18.6 |
| Example 4-2 | 3 | 5 | 250 | 60 | 25.4 |
| Example 4-3 | 3 | 5 | 300 | 60 | 31.6 |

The same analysis results as in Example 1 were obtained from STEM and XRD results by the reduction treatment in Reference Example 4. The same conclusion as in Examples 1 to 3 was obtained also in Reference Example 4. A reduction treatment of the silicon compound coated precursor microparticles obtained in Comparative Example 4 did not produce the silicon compound coated metal microparticles of the present invention.

## Claims

1. Silicon compound coated metal microparticles in which at least a part of a surface of a metal microparticle composed of at least one of metal elements or metalloid elements is coated with a silicon compound,
wherein the metal elements or metalloid elements comprise at least one selected from the group consisting or iron, silicon and aluminium,
the silicon compound contains an amorphous silicon compound,
wherein the silicon compound coated metal microparticles are one selected from the following (a) and (b):
(a) silicon compound coated metal microparticles obtained by a reduction treatment of silicon compound coated precursor microparticles in which at least a part of a surface of a precursor microparticle containing a precursor of the metal microparticles is coated with a silicon compound, and
(b) silicon compound coated metal microparticles obtained by a reduction treatment and heat treatment of silicon doped precursor microparticles containing a precursor of the metal microparticles, whereby silicon contained in the precursor microparticles moves from the inside to the outside of the microparticles.

2. The silicon compound coated metal microparticles according to claim 1,
wherein the silicon compound coated precursor microparticles are silicon compound coated precursor microparticles in which at least a part of a surface of one precursor microparticle is coated with a silicon compound,
a primary particle diameter of the precursor microparticle is 100 nm or less, and
a primary particle diameter of the silicon compound coated precursor microparticle is 100.5% or more and 190% or less relative to a primary particle diameter of the precursor microparticle.

3. The silicon compound coated metal microparticles according to claim 1 or 2, wherein the silicon compound coated precursor microparticles are core-shell type silicon compound coated precursor microparticles in which entire surface of one core precursor microparticle is coated with a shell silicon compound.

4. The silicon compound coated metal microparticles according to any one of claims 1 to 3,
wherein the silicon compound coated precursor microparticles are silicon compound coated precursor microparticles in which at least a part of a surface of an aggregate of a plurality of precursor microparticles is coated with a silicon compound,
a diameter of the aggregate is 100 nm or less, and
a particle diameter of the silicon compound coated precursor microparticle is 100.5% or more and 190% or less relative to a diameter of the aggregate.

5. The silicon compound coated metal microparticles according to any one of claims 1 to 4,
wherein the silicon compound coated precursor microparticles or silicon doped precursor microparticles contain silicon inside the precursor microparticles before a heat treatment under a reduction atmosphere, and
at least a part of the silicon is transferred from the inside of the precursor microparticles in the outer peripheral direction, as compared with the state before the heat treatment under a reduction atmosphere.

6. The silicon compound coated metal microparticles according to any one of claims 1 to 5, wherein the precursor is at least one selected from a salt, an oxide, a hydroxide and a hydroxide oxide of at least one of metal elements or metalloid elements constituting the silicon compound coated metal microparticles.

7. The silicon compound coated metal microparticles according to any one of claims 1 to 6, wherein the precursor contains an amorphous precursor.

8. The silicon compound coated metal microparticles according to any one of claims 1 to 7,
wherein the silicon compound coated metal microparticles are silicon compound coated metal microparticles in which at least a part of a surface of one metal microparticle is coated with a silicon compound,
a primary particle diameter of the metal microparticle is 1 µm or less, and
a primary particle diameter of the silicon compound coated metal microparticle is 100.5% or more and 190% or less relative to a primary particle diameter of the metal microparticle.

9. The silicon compound coated metal microparticles according to claim 8, wherein the silicon compound coated metal microparticles are core-shell type silicon compound coated metal microparticles in which entire surface of one core metal microparticle is coated with a shell silicon compound.

10. The silicon compound coated metal microparticles according to any one of claims 1 to 7,
wherein the silicon compound coated metal microparticles are silicon compound coated metal microparticles in which at least a part of a surface of an aggregate of a plurality of metal microparticles is coated with a silicon compound,
a diameter of the aggregate is 100 nm or less, and
a particle diameter of the silicon compound coated metal microparticle is 100.5% or more and 190% or less relative to a diameter of the aggregate.

11. A composition for coating, a composition for a transparent material, a magnetic material composition, a conductive composition, a composition for coloring, a reaction composition or a catalyst composition, comprising the silicon compound coated metal microparticles according to any one of claims 1 to 10.

12. A method of producing silicon compound coated metal microparticles in which at least a part of a surface of a metal microparticle composed of at least one of metal elements or metalloid elements is coated with a silicon compound,
wherein the metal elements or metalloid elements comprise at least one selected from the group consisting of iron, silicon and aluminium,
wherein the silicon compound contains an amorphous silicon compound,
wherein silicon compound coated precursor microparticles in which at least a part of a surface of a precursor microparticle containing a precursor of the metal microparticles is coated with a silicon compound, or silicon doped precursor microparticles containing a precursor of the metal microparticles, are subjected to a reduction treatment up to silicon compound coated metal microparticles.

13. The method of producing silicon compound coated metal microparticles according to claim 12,
wherein the silicon compound coated precursor microparticles or the silicon doped precursor microparticles are subjected to a reduction treatment up to silicon coated metal microparticles, and the surface layer of the silicon coated metal microparticles obtained by the reduction treatment is subjected to an oxidation treatment.

## Patentansprüche

1. Mit einer Siliziumverbindung beschichtete Metallmikropartikel, wobei mindestens ein Teil einer Oberfläche eines Metallmikropartikels, das aus mindestens einem von Metallelementen oder Metalloidelementen zusammengesetzt ist, mit einer Siliziumverbindung beschichtet ist,
wobei die Metallelemente oder Metalloidelemente mindestens eines umfassen, ausgewählt aus der Gruppe, bestehend aus Eisen, Silizium und Aluminium,
die Siliziumverbindung eine amorphe Siliziumverbindung enthält,
wobei die mit einer Siliziumverbindung beschichteten Metallmikropartikel eines der Folgenden (a) und (b) sind:
(a) mit einer Siliziumverbindung beschichtete Metallmikropartikel, erzielt durch eine Reduktionsbehandlung von mit einer Siliziumverbindung beschichteten Vorläufer-Mikropartikeln, wobei mindestens ein Teil einer Oberfläche eines Vorläufer-Mikropartikels, das einen Vorläufer der Metallmikropartikel enthält, mit einer Siliziumverbindung beschichtet ist, und
(b) mit einer Siliziumverbindung beschichtete Metallmikropartikel, die durch eine Reduktionsbehandlung und eine Wärmebehandlung von mit Silizium dotierten Vorläufer-Mikropartikeln erzielt werden, die einen Vorläufer der Metallmikropartikel enthalten, wodurch sich das in den Vorläufer-Mikropartikeln enthaltene Silizium von der Innenseite zur Außenseite der Mikropartikel bewegt.

2. Mit einer Siliziumverbindung beschichtete Metallmikropartikel nach Anspruch 1,
wobei die mit einer Siliziumverbindung beschichteten Vorläufer-Mikropartikel mit einer Siliziumverbindung beschichtete Vorläufer-Mikropartikel sind, bei dem mindestens ein Teil einer Oberfläche eines Vorläufer-Mikropartikels mit einer Siliziumverbindung beschichtet ist,
ein primärer Partikeldurchmesser des Vorläufer-Mikropartikels 100 nm oder weniger beträgt, und
ein primärer Partikeldurchmesser des mit einer Siliziumverbindung beschichteten Vorläufer-Mikropartikels 100,5 % oder mehr und 190 % oder weniger in Bezug auf den primären Partikeldurchmesser des Vorläufer-Mikropartikels beträgt.

3. Mit einer Siliziumverbindung beschichtete Metallmikropartikel nach Anspruch 1 oder 2, wobei die mit einer Siliziumverbindung beschichteten Vorläufer-Mikropartikel Vorläufer-Mikropartikel mit einer Siliziumverbindung vom Kern-Schale-Typ sind, bei dem die gesamte Oberfläche eines Kern-Vorläufer-Mikropartikels mit einer Siliziumverbindung als Schale beschichtet ist.

4. Mit einer Siliziumverbindung beschichtete Metallmikropartikel nach einem der Ansprüche 1 bis 3,
wobei die mit einer Siliziumverbindung beschichteten Vorläufer-Mikropartikel mit einer Siliziumverbindung beschichtete Vorläufer-Mikropartikel sind, bei dem mindestens ein Teil einer Oberfläche eines Aggregats einer Vielzahl von Vorläufer-Mikropartikeln mit einer Siliziumverbindung beschichtet ist,
ein Durchmesser des Aggregats 100 nm oder weniger beträgt, und
ein Partikeldurchmesser des mit einer Siliziumverbindung beschichteten Vorläufer-Mikropartikels 100,5 % oder mehr und 190 % oder weniger in Bezug auf einen Durchmesser des Aggregats beträgt.

5. Mit einer Siliziumverbindung beschichtete Metallmikropartikel nach einem der Ansprüche 1 bis 4,
wobei die mit einer Siliziumverbindung beschichteten Vorläufer-Mikropartikel oder die mit Silizium dotierten Vorläufer-Mikropartikel Silizium im Inneren der Vorläufer-Mikropartikel vor einer Wärmebehandlung unter einer Reduktionsatmosphäre enthalten, und
mindestens ein Teil des Siliziums aus dem Inneren der Vorläufer-Mikropartikel in die äußere periphere Richtung transferiert wird, verglichen mit dem Zustand vor der Wärmebehandlung unter einer Reduktionsatmosphäre.

6. Mit einer Siliziumverbindung beschichtete Metallmikropartikel nach einem der Ansprüche 1 bis 5, wobei der Vorläufer mindestens eines ist, ausgewählt aus einem Salz, einem Oxid, einem Hydroxid und einem Hydroxidoxid von mindestens einem von Metallelementen oder Metalloidelementen, die die mit einer Siliziumverbindung beschichteten Metallmikroteilchen bilden.

7. Mit einer Siliziumverbindung beschichtete Metallmikropartikel nach einem der Ansprüche 1 bis 6, wobei der Vorläufer einen amorphen Vorläufer enthält.

8. Mit einer Siliziumverbindung beschichtete Metallmikropartikel nach einem der Ansprüche 1 bis 7,
wobei die mit einer Siliziumverbindung beschichteten Metallmikropartikel mit einer Siliziumverbindung beschichtete Metallmikropartikel sind, bei dem mindestens ein Teil einer Oberfläche eines Metallmikropartikels mit einer Siliziumverbindung beschichtet ist,
ein primärer Partikeldurchmesser des Metallmikropartikels 1 µm oder weniger beträgt und
ein primärer Partikeldurchmesser des mit einer Siliziumverbindung beschichteten Metallmikropartikels 100,5 % oder mehr und 190 % oder weniger in Bezug auf einen primären Partikeldurchmesser des Metallmikropartikels beträgt.

9. Mit einer Siliziumverbindung beschichtete Metallmikropartikel nach Anspruch 8, wobei die mit einer Siliziumverbindung beschichteten Metallmikropartikel mit einer Siliziumverbindung beschichtete Metallmikropartikel vom Kern-Schale-Typ sind, bei denen die gesamte Oberfläche eines Kern-Metallmikropartikels mit einer Siliziumverbindung als Schale beschichtet ist.

10. Mit einer Siliziumverbindung beschichtete Metallmikropartikel nach einem der Ansprüche 1 bis 7,
wobei die mit einer Siliziumverbindung beschichteten Metallmikropartikel mit einer Siliziumverbindung beschichtete Metallmikropartikel sind, bei dem mindestens ein Teil einer Oberfläche eines Aggregats aus einer Vielzahl von Metallmikropartikeln mit einer Siliziumverbindung beschichtet ist,
ein Durchmesser des Aggregats 100 nm oder weniger beträgt, und
ein Partikeldurchmesser des mit einer Siliziumverbindung beschichteten Metallmikropartikels 100,5 % oder mehr und 190 % oder weniger in Bezug auf einen Durchmesser des Aggregats beträgt.

11. Zusammensetzung zur Beschichtung, Zusammensetzung für ein transparentes Material, magnetische Materialzusammensetzung, leitfähige Zusammensetzung, Zusammensetzung zum Färben, Reaktionszusammensetzung oder Katalysatorzusammensetzung, umfassend die mit einer Siliziumverbindung beschichteten Metallmikropartikel nach einem der Ansprüche 1 bis 10.

12. Verfahren zur Herstellung von mit einer Siliziumverbindung beschichteten Metallmikropartikeln, in denen mindestens ein Teil einer Oberfläche eines Metallmikropartikels, das aus mindestens einem von Metallelementen oder Metalloidelementen zusammengesetzt ist, mit einer Siliziumverbindung beschichtet ist,
wobei die Metallelemente oder Metalloidelemente mindestens eines umfassen, ausgewählt aus der Gruppe, bestehend aus Eisen, Silizium und Aluminium,
wobei die Siliziumverbindung eine amorphe Siliziumverbindung enthält,
wobei mit einer Siliziumverbindung beschichtete Vorläufer-Mikropartikel, bei denen mindestens ein Teil einer Oberfläche eines Vorläufer-Mikropartikels, der einen Vorläufer der Metallmikropartikel enthält, mit einer Siliziumverbindung beschichtet ist, oder mit Silizium dotierte Vorläufer-Mikropartikel, die einen Vorläufer der Metallmikropartikel enthalten, einer Reduktionsbehandlung unterzogen werden, bis sie mit einer Siliziumverbindung beschichtete Metallmikropartikel sind.

13. Verfahren zur Herstellung von mit einer Siliziumverbindung beschichteten Metallmikropartikeln nach Anspruch 12,
wobei die mit einer Siliziumverbindung beschichteten Vorläufer-Mikropartikel oder die mit Silizium dotierten Vorläufer-Mikropartikel einer Reduktionsbehandlung unterzogen werden, bis sie mit Silizium beschichtete Metallmikropartikel sind, und die Oberflächenschicht der durch die Reduktionsbehandlung erzielten mit Silizium beschichteten Metallmikropartikel einer Oxidationsbehandlung unterzogen wird.

## Revendications

1. Microparticules métalliques revêtues d'un composé de silicium dans lesquelles au moins une partie d'une surface d'une microparticule métallique composée d'au moins un parmi des éléments métalliques ou des éléments métalloïdes est revêtue d'un composé de silicium,
dans lesquelles les éléments métalliques ou éléments métalloïdes comprennent au moins l'un sélectionné à partir du groupe constitué du fer, du silicium et de l'aluminium,
le composé de silicium contient un composé de silicium amorphe,
dans lequel les microparticules métalliques revêtues d'un composé de silicium sont l'une sélectionnée à partir des microparticules (a) et (b) suivantes :
(a) des microparticules métalliques revêtues d'un composé de silicium obtenues par un traitement par réduction de microparticules de précurseur revêtues d'un composé de silicium dans lesquelles au moins une partie d'une surface d'une microparticule de précurseur contenant un précurseur des microparticules métalliques est revêtue d'un composé de silicium, et
(b) des microparticules métalliques revêtues d'un composé de silicium obtenues par un traitement par réduction et traitement thermique de microparticules de précurseur dopées au silicium contenant un précurseur des microparticules métalliques, moyennant quoi le silicium contenu dans les microparticules de précurseur se déplace de l'intérieur vers l'extérieur des microparticules.

2. Microparticules métalliques revêtues d'un composé de silicium selon la revendication 1,
dans lesquelles les microparticules de précurseur revêtues d'un composé de silicium sont des microparticules de précurseur revêtues d'un composé de silicium dans lesquelles au moins une partie d'une surface d'une microparticule de précurseur est revêtue d'un composé de silicium,
un diamètre de particule primaire de la microparticule de précurseur est de 100 nm ou moins, et
un diamètre de particule primaire de la microparticule de précurseur revêtue d'un composé de silicium est de 100,5 % ou plus et de 190 % ou moins par rapport à un diamètre de particule primaire de la microparticule de précurseur.

3. Microparticules métalliques revêtues d'un composé de silicium selon la revendication 1 ou la revendication 2, dans lesquelles les microparticules de précurseur revêtues d'un composé de silicium sont des microparticules de précurseur revêtues d'un composé de silicium de type noyau-enveloppe, dans lesquelles la totalité de la surface d'une microparticule de précurseur à noyau est revêtue d'un composé de silicium d'enveloppe.

4. Microparticules métalliques revêtues d'un composé de silicium selon l'une quelconque des revendications 1 à 3,
dans lesquelles les microparticules de précurseur revêtues d'un composé de silicium sont des microparticules de précurseur revêtues d'un composé de silicium dans lesquelles au moins une partie d'une surface d'un agrégat d'une pluralité de microparticules de précurseur est revêtue d'un composé de silicium,
un diamètre de l'agrégat est de 100 nm ou moins, et
un diamètre de particule de la microparticule de précurseur revêtue d'un composé de silicium est de 100,5 % ou plus et de 190 % ou moins par rapport à un diamètre de l'agrégat.

5. Microparticules métalliques revêtues d'un composé de silicium selon l'une quelconque des revendications 1 à 4,
dans lesquelles les microparticules de précurseur revêtues d'un composé de silicium ou les microparticules de précurseur dopées au silicium contiennent du silicium à l'intérieur des microparticules de précurseur avant un traitement thermique sous une atmosphère de réduction, et
au moins une partie du silicium est transférée à partir de l'intérieur des microparticules de précurseur dans la direction périphérique externe, par rapport à l'état avant le traitement thermique sous une atmosphère de réduction.

6. Microparticules métalliques revêtues d'un composé de silicium selon l'une quelconque des revendications 1 à 5, dans lesquelles le précurseur est au moins l'un sélectionné parmi un sel, un oxyde, un hydroxyde et un oxyde d'hydroxyde d'au moins l'un parmi des éléments métalliques ou des éléments métalloïdes constituant les microparticules métalliques revêtues d'un composé de silicium.

7. Microparticules métalliques revêtues d'un composé de silicium selon l'une quelconque des revendications 1 à 6, dans lesquelles le précurseur contient un précurseur amorphe.

8. Microparticules métalliques revêtues d'un composé de silicium selon l'une quelconque des revendications 1 à 7,
dans lesquelles les microparticules métalliques revêtues d'un composé de silicium sont des microparticules métalliques revêtues d'un composé de silicium, dans lesquelles au moins une partie d'une surface d'une microparticule métallique est revêtue d'un composé de silicium,
un diamètre de particule primaire de la microparticule métallique est de 1 µm ou moins, et
un diamètre de particule primaire de la microparticule métallique revêtue d'un composé de silicium est de 100,5 % ou plus et de 190 % ou moins par rapport à un diamètre de particule primaire de la microparticule métallique.

9. Microparticules métalliques revêtues d'un composé de silicium selon la revendication 8, dans lesquelles les microparticules métalliques revêtues d'un composé de silicium sont des microparticules métalliques revêtues d'un composé de silicium de type noyau-enveloppe dans lesquelles la totalité de la surface d'une microparticule métallique de noyau est revêtue d'un composé de silicium d'enveloppe.

10. Microparticules métalliques revêtues d'un composé de silicium selon l'une quelconque des revendications 1 à 7,
dans lesquelles les microparticules métalliques revêtues d'un composé de silicium sont des microparticules métalliques revêtues d'un composé de silicium dans lesquelles au moins une partie d'une surface d'un agrégat d'une pluralité de microparticules métalliques est revêtue d'un composé de silicium,
un diamètre de l'agrégat est de 100 nm ou moins, et
un diamètre de particule de la microparticule métallique revêtue d'un composé de silicium est de 100,5 % ou plus et de 190 % ou moins par rapport à un diamètre de l'agrégat.

11. Composition destinée à un revêtement, composition destinée à un matériau transparent, composition de matériau magnétique, composition conductrice, composition destinée à une coloration, composition de réaction ou composition de catalyseur, comprenant les microparticules métalliques revêtues d'un composé de silicium selon l'une quelconque des revendications 1 à 10.

12. Procédé de production de microparticules métalliques revêtues d'un composé de silicium dans lesquelles au moins une partie d'une surface d'une microparticule métallique composée d'au moins l'un parmi des éléments métalliques ou des éléments métalloïdes est revêtue d'un composé de silicium,
dans lequel les éléments métalliques ou les éléments métalloïdes comprennent au moins l'un sélectionné dans le groupe constitué du fer, du silicium et de l'aluminium,
dans lequel le composé de silicium contient un composé de silicium amorphe,
dans lequel les microparticules de précurseur revêtues d'un composé de silicium dans lesquelles au moins une partie d'une surface d'une microparticule de précurseur contenant un précurseur des microparticules métalliques est revêtue d'un composé de silicium, ou des microparticules de précurseur dopées au silicium contenant un précurseur des microparticules métalliques, sont soumises à un traitement par réduction jusqu'à être des microparticules métalliques revêtues d'un composé de silicium.

13. Procédé de production de microparticules métalliques revêtues d'un composé de silicium selon la revendication 12,
dans lequel les microparticules de précurseur revêtues d'un composé de silicium ou les microparticules de précurseur dopées au silicium sont soumises à un traitement par réduction jusqu'à être des microparticules métalliques revêtues de silicium, et la couche de surface des microparticules métalliques revêtues de silicium obtenues par le traitement par réduction est soumise à un traitement par oxydation.
